# EUROPEAN PATENT SPECIFICATION

(11) **EP 2 103 890 B1**
(45) Date of publication and mention of the grant of the patent: **04.09.2013**
(21) Application number: 08005305.1
(22) Date of filing: 20.03.2008
(51) Int. Cl.: F25D 21/00, F24D 19/10, F25B 30/02

(54) **Heating and method for controlling the heating**
Heizung und Steuerverfahren für die Heizung
Dispositif de chauffage et procédé de contrôle du chauffage

(43) Date of publication of application: 23.09.2009
(73) Proprietor: DAIKIN INDUSTRIES, LTD., Osaka-shi, Osaka 530-8323 (JP); Daikin Europe N.V., 8400 Oostende (BE)
(72) Inventor: Aspeslagh, Bart, 9800 Deinze (BE); Ochi, Hiroki, Sakai Osaka, 591-8511 (JP); Kataoka, Hidehiko, Kusatsu Shiga, 525-8526 (JP)
(74) Representative: HOFFMANN EITLE

(56) References cited:
- JP-A- 5 288 386
- JP-A- 7 012 394
- US-A- 4 573 326

## Description

### Field of the invention

The present invention relates to a heating comprising a heat pump, particularly an air-source heat pump, having an outdoor evaporator, a compressor, a condenser and an expansion means connected by a refrigerant piping in a cycle, a heating medium piping for circulating a heating medium and flowing the heating medium through the condenser exchanging heat between the refrigerant and the heating medium. In this context, it is to be understood that the heating of the present invention may also be an installation capable of both heating and cooling, wherein, in a cooling mode, the heating medium is used as cooling medium, the outer evaporator serves as outdoor condenser and the condenser serves as the evaporator of the heat pump. The present invention also relates to a method for controlling such a heating. A heating and a method for controlling such heating having the features in the preamble of claims 1 and 9 is known from JP-A-05-288 386.

### Background of the invention

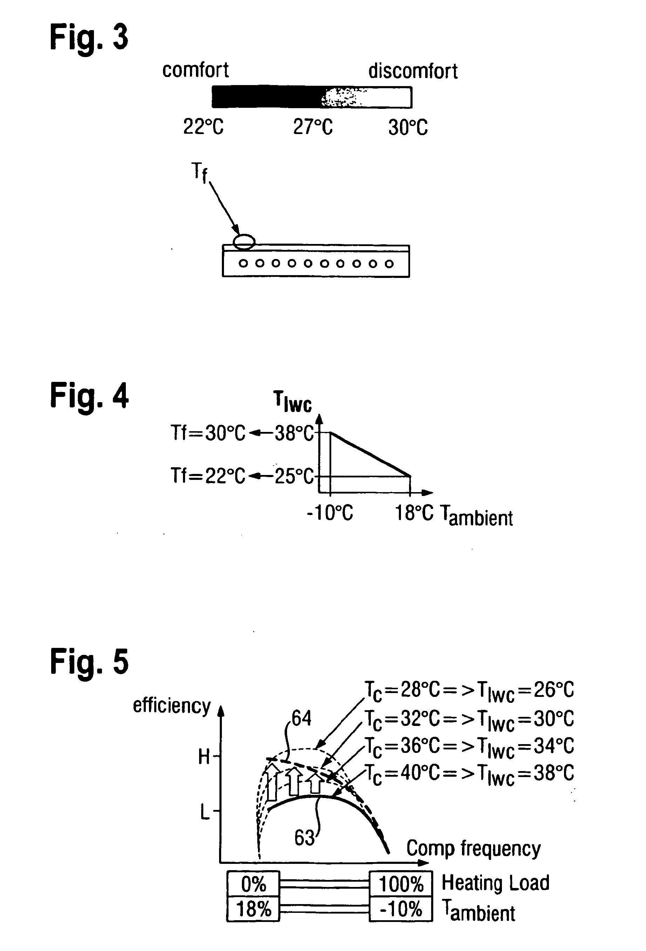

In existing installations the heating is controlled based on a fixed flow temperature T_{1wc} of the heating medium. In other words, a flow temperature T_{1wc} is initially selected (input), so as to be capable of providing sufficient heat to a heat emitter in a room to be heated in order to obtain the desired room temperature in which the heat emitter is arranged. That is, the flow temperature is constant and rather high in all operating conditions. This in turn, and particularly in the intermediate season (spring/autumn) with moderate temperatures, leads to e.g. an increased floor temperature T_{f} or an increased surface temperature of a radiator as heat emitter. As depicted in Fig. 3, the floor temperature T_{f} is the temperature of the floor in the room to be heated comprising a floor heating as the heat emitter. Because of the high flow temperature and particularly during the intermediate season, the floor temperature T_{f} resides in the range of 30°C and even above, which is a temperature that is to be said to cause a discomfort (e.g. heavy legs).

Furthermore, to obtain the predetermined set flow temperature in existing installations, the compressor of the heat pump is on/off controlled, i.e. if there exists a heat demand to obtain the flow temperature, the compressor is started, whereas when no such demand exists, the compressor is shut off/down. The compressor, in the on state, is driven at the same frequency independent of the heat demand and, hence, requires the same amount of electrical energy.

In addition, the efficiency of the heat pump decreases with an increasing condensing temperature T_{c} of the refrigerant. The condensing temperature T_{c} i.e. the temperature of the refrigerant entering the condenser is dependent on the flow temperature. If the flow temperature increases also the condensing temperature T_{c} increases. Therefore, if a high flow temperature is set in the existing systems also the condensing temperature T_{c} is increased. Therefore and because of the compressor being operated based on an on/off control at a set frequency, the efficiency of the system, particularly in the intermediate seasons, is unnecessarily high.

In order to provide a heating which compared to the existing heatings is improved in regard of comfort and efficiency, the Applicant has suggested to control the room heating based on a floating set point, i.e. on a preferably continuously (real time or in time intervals) adapted flow temperature of the heating medium based on the ambient conditions including the outdoor temperature.

Such a floating set point together with an inverter controlled compressor enabling the compressor frequency to be adapted to the actual required heat load leads to an increased efficiency and an improved comfort of the existing heating.

For measuring the outdoor temperature, a temperature sensor will be arranged in or at the outdoor unit. Therefore, the temperature sensor will be influenced by the surface temperature of the evaporator/condenser of the heat pump, i.e. by the radiated heat if any.

Further, such heatings using a heat pump, in low temperature conditions, e.g. in winter, encompass the problem that condensation water formed on the evaporator becomes solid, i.e. an ice cover is formed on the outer surface of the evaporator decreasing the transfer of heat between the outdoor air and the refrigerant. Therefore, existing systems suggests a defrosting mode to deice or defrost the evaporator. One possibility to effect such a defrosting mode is to reverse the flow direction of the refrigerant in the heat pump (reversed cycle), i.e. to transfer heat from the heating medium to the refrigerant and, hence, to the evaporator. Another possibility is to pass hot gas refrigerant from the compressor through the evaporator as described in e.g. US 2005-050696 or to use an electric heater for defrosting, wherein the flow direction of the refrigerant in the defrosting mode is maintained for transferring heat from the refrigerant to the heating medium.

In any defrosting mode heat is applied to the evaporator for melting the ice cover on the outer surface of the evaporator. This heat being radiated from the evaporator may influence the temperature sensor measuring the outdoor temperature. Hence, the detected value of the sensor may not reflect the actual outdoor temperature, but a higher temperature. This, in turn, may lead to an incorrect set flow temperature resulting in further problems such as a flow temperature being too low for satisfying the heat demand of the heating, a non-stable room temperature, etc.

Therefore, it is the object underlying the present invention to provide a heating, which prevents an inaccurate flow temperature being set during and after a defrosting mode so as to provide a more reliable heating, and to provide a corresponding control method.

This object according to the present invention is solved by a heating as defined in claim 1 and a method as defined in claim 10.

The general idea underlying the present invention is to ignore the value measured by the outdoor temperature sensor during and possibly also a certain period of time after the defrosting mode so as to prevent a false setting of the flow temperature during and/or after the defrosting mode.

Hence, the heating of the present invention comprises a heat pump having an evaporator, a compressor, a condenser and an expansion means connected by a refrigerant piping in cycle, wherein at least the evaporator is arranged in an outdoor unit. Such an outdoor unit as the term already implies is to be disposed and arranged outside and at a side at which the outdoor temperature may be measured. The outdoor temperature sensor of the present invention is arranged in or at the outdoor unit. In addition, the heating of the present invention comprises a heating medium piping formed to circulate a heating medium and to flow the heating medium through the condenser exchanging heat between the refrigerant and the heating medium. Further, the heating of the present invention comprises a control configured to, preferably continuously (real time or in time intervals), set the flow temperature of the heating medium based on the outdoor temperature measured by the sensor and to, preferably periodically (predetermined time intervals, which may be fixed or adapted or at certain conditions), perform a defrosting mode defrosting the outdoor evaporator. In the defrosting mode, the control is configured to ignore the measurement result of the outdoor temperature sensor so as to prevent a false setting of the flow temperature during the defrosting mode. In particular, the heating medium may be used for heating a heat emitter provided in a room to be heated, which may comprise floor heating loops or radiators. In addition and as previously indicated, the heating of the present invention may also be an installation capable of both, heating and cooling, wherein in a cooling mode, the outdoor evaporator functions as outdoor condenser and the condenser functions as evaporator. In the cooling mode, the heating medium will be used as cooling medium. In addition, the cooling mode may also be used as defrosting mode because heat is transferred from the heating/cooling medium to the refrigerant which then may be used to defrost the outdoor evaporator/condenser. Moreover, the flow temperature in the context of the present application may be temperature of the heating medium flowing into the condenser, i.e. the temperature of the heating medium upstream of the condenser. However, it is preferred that the flow temperature is the temperature of the heating medium leaving the condenser and, hence, downstream of the condenser. In the heating of the present invention, the flow temperature is not a predetermined and fixed value as in the prior art but is adapted depending on a changing outdoor temperature. This adaptive control of the flow temperature leads to improved comfort because of a lower flow temperature T_{f} particularly adapted to the ambient conditions and to an improved efficiency. In addition, the present invention results in a more reliable installation because a false setting of the flow temperature is prevented.

As previously indicated, various possibilities for the defrosting mode exist such as a reversed cycled defrost, in which the flow direction of refrigerant in the heat pump cycle is reversed, compared to the heating mode, for transferring heat from the heating medium to the refrigerant. However, there are also other possibilities such as the appliance (blowing) of hot air to (on) the outdoor evaporator or an electric heater emitting heat to the outdoor evaporator for removing the ice formed on the outer surfaces of the evaporator.

In the latter defrosting configuration, heat is still transferred from the refrigerant to the heating medium during the defrosting mode so that the control is configured to set the flow temperature during the defrosting mode. However, in order to not falsely set the flow temperature, the control ignores the result measured by the outdoor temperature sensor during the defrosting mode and bases the flow temperature on the outdoor temperature measured immediately before starting the defrosting mode, i.e. the last measurement results before the defrosting mode is started.

Further, if a reverse cycle of the heat pump is used for defrosting and according to one embodiment of the present invention, the control is configured to set the flow temperature of heating medium after termination of the defrosting mode based on the outdoor temperature measured immediately before starting the defrosting mode. This may be advantageous particularly if the influence of the surface temperature of the outdoor evaporator on the measurement result of the outdoor temperature sensor immediately after stopping the defrosting mode is still remarkable and may result in a falsely set flow temperature. Therefore, it may be preferred to set the flow temperature immediately after termination of defrosting mode based on the outdoor temperature measured immediately before starting the defrosting mode.

In this context, it may be preferred to set the flow temperature of the heating medium after termination of the defrosting mode on the outdoor temperature measured immediately before starting the defrosting mode until a predetermined condition has been met (transitional mode) such as a certain period of time has been lapsed or a predetermined temperature of the refrigerant downstream, particularly immediately downstream, of the evaporator has been detected (reached). If the predetermined condition is met, the control is configured to return to the normal mode setting the flow temperature based on the actual outdoor temperature measured by the sensor.

According to another embodiment, this transitional mode is omitted and the control is configured to set the flow temperature of the heating medium after termination of the defrosting mode based on the actual outdoor temperature measured at this time.

Further, the control according to the invention is configured to decrease the flow temperature of the heating medium with an increasing outdoor temperature and to increase the flow temperature of the heating medium with a decreasing outdoor temperature. This particularly adapts the flow temperature of the heating medium to the amount of heat needed to obtain a desired room temperature in view of the outdoor climate.

Furthermore and particularly in view of comfort, it is preferred that the flow temperature of the heating medium is set at a maximum between 36°C and 40°C, preferably at 38°C and at a minimum between 23°C and 27°C, preferably at 25°C. This at all time provides.for a maximum comfort in that the floor temperature T_{f} remains between 30°C and 22°C.

Further and in order to increase the efficiency of the overall system, particularly the heat pump, the compressor is connected to the control via an inverter and the control is configured to adapt the compressor frequency based on the outdoor temperature. It is also possible to adapt the compressor frequency based on the set flow temperature, which in turn is adapted based on the outdoor temperature. In particular it is preferred that the control is configured to decrease the compressor frequency with an increasing outdoor temperature, i.e. decreasing flow temperature, and to increase the compressor frequency with a decreasing outdoor temperature, i.e. with an increasing flow temperature. If the outdoor temperature is low, a higher flow temperature will be set so that a higher heating load is required. Because of the higher flow temperature are higher condensing temperature T_{c} will be required in the heat pump system. Therefore, the compressor frequency is increased. However, if the outdoor temperature increases with a decrease in the flow temperature and resulting in a decreased condensing temperature T_{c}, the heating load is reduced and the compressor frequency is also reduced by the controller to obtain the required condensing temperature T_{c} corresponding to the set flow temperature. Therefore, less energy is necessary to drive the compressor which increases the overall efficiency.

Further and particularly if the outdoor temperature sensor is arranged in the proximity of the evaporator the influence of the surface temperature of the evaporator, i.e. of the heat radiated by the evaporator during defrosting, is high. Therefore, the present application particularly applies to such a configuration.

Beside the heating, the present invention also provides a method for controlling the heating. The method comprises the step of setting the flow temperature of the heating medium based on the outdoor temperature and performing a defrosting mode defrosting the outdoor evaporator, wherein the measured outdoor temperature is ignored during the defrosting mode. The preferred embodiments of this method are based on the corresponding configurations of the control of the heating described above so that further explanation is omitted to avoid repetitions.

### Brief description of the drawings

In the following a preferred embodiment of the present invention from which the skilled person may derive further advantages and features of the present invention is explained with reference to the accompanying drawings in which:
Fig. 1 is a perspective view of a room heating and cooling installation in which the present invention may be implemented;
Fig. 2 is a system diagram for schematically explaining the components of the installation shown in Fig. 1;
Fig. 3 discloses a schematic cross-section of a floor heating with the corresponding temperature range of the floor temperature T_{f} being perceived as comfortable or discomfortable;
Fig. 4 is a schematic diagram of adapting the flow temperature T_{lwc} based on the outdoor temperature T_{ambient} with the resulting floor temperature T_{f};
Fig. 5 is a schematic diagram showing the increase of efficiency with respect to an adapted flow temperature Tlwc and an adapted compressor frequency;
Fig. 6 schematically shows a room to be heated together with the installtion as shown in Figs. 1 and 2;
Fig. 7 shows a schematic view of the cycling of a room thermostat with reference to the flow temperature T_{lwc} in a) an non-adaptive mode and b) the adaptive mode of the present invention;
Fig. 8 shows a schematic view of the cycling of a room thermostat with reference to the flow temperature T_{lwc} in a) an non-adaptive mode and b) the adaptive mode of the present invention;
Fig. 9 is a flow chart indicating the control of the heating of the present invention.
Fig. 10 is a schematic chart showing the conditions to be met for starting and ending the defrosting mode.

### Embodiment of the invention

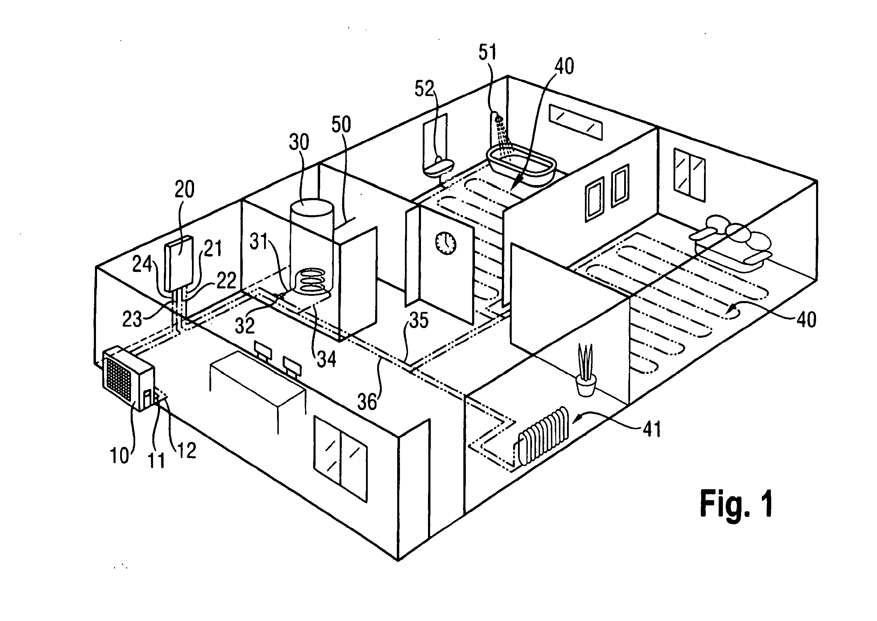

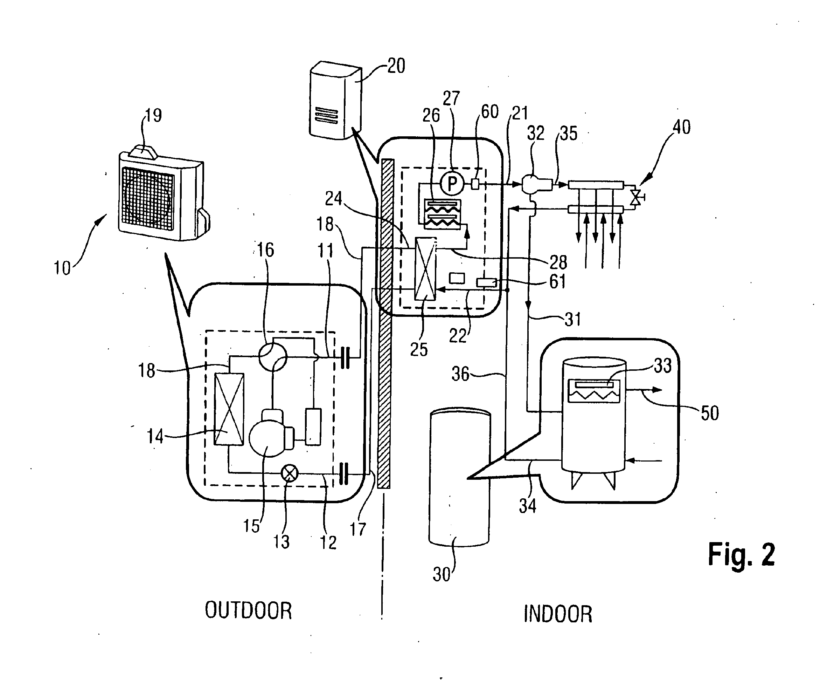

The present application will be described in the following as being implemented in an installation which is capable of heating and cooling a predetermined space (room) and heating water in a hot water tank, the water via piping 50 being used for sanitary purposes like the tabs 52, the shower 51, etc. Yet it is to be understood that the present invention may also be implemented in other installations than the one shown in Figs. 1 and 2, where appropriate.

The installation shown in Fig. 1 consists of three major components, an outdoor unit 10, an indoor unit 20 and a hot water tank 30. The outdoor unit 10 is connected to a piping 11, 12 which connects the outdoor unit 10 to the indoor unit 20. The outdoor unit 10 comprises an inlet/outlet 12 and an outlet/inlet 11 for a refrigerant piping. The indoor unit 20 comprises an inlet/outlet 24 and an outlet/inlet 23 for the refrigerant piping. In addition, the indoor unit has an outlet 21 and an inlet 22 for the fluid to be circulated in the fluid circuit (depending on the mode the fluid is heating or cooling fluid). The fluid may be water or a brine solution. The piping downstream of the outlet 21 is connected via a valve 32 to a piping 31 and a piping 35. The piping 31 passes through the interior of the hot water tank 30 in form of a coil (see Fig. 1) and leaves the hot water tank 30 via a piping 34 connected to a piping 36 leading to the inlet 22. The piping 35 downstream of the valve 32 leads to a heat emitter 41 and/or underfloor heating loops 40 and then is refed to the indoor unit via the piping 36 and the inlet 22.

As will be appreciated, the connections 11, 12 to the outdoor unit 10 and the connections 23, 24 to the indoor unit may respectively be reversed depending on the mode in which the system is operated, i.e. the heating mode or the cooling mode.

As shown in Fig. 2 the outdoor unit 10 comprises an evaporator and/or condenser 14, a four-way valve 16, a compressor 15 and an expansion device 13, which is may be an electric valve or a capillary. The indoor unit 20 inter alia comprises a condenser/evaporator 25. These components form a heat pump. Hence, the evaporator/condenser 14, the compressor 15, the condenser/evaporator 25 and the expansion means 13 are connected in this order in a cycle or loop by means of a refrigerant piping 17, 18. A refrigerant is circulated by means of the compressor 15 in the refrigerant piping 17, 18. In the heating mode the refrigerant circulates clockwise in Fig. 2. Hence, the refrigerant leaving the condenser 25 and having a first temperature T₁ passes the expansion means 13, the pressure being reduced. Afterwards, the refrigerant passes the evaporator 14 and is evaporated having a second temperature T₂ higher than the first temperature. After leaving the evaporator 14, the refrigerant passes through the compressor, the pressure being increased. Finally, the refrigerant is again condensed to the first temperature T₁ in the condenser 25, wherein the heat from the refrigerant is transferred to the water or brine solution (fluid) in the piping connected to the indoor unit via the connections (inlet 22 and outlet 21.

In the cooling mode, this process is reversed, wherein the component 14 then serves as condenser and the component 25 as evaporator. The refrigerant then circulates counter-clockwise in Fig. 2.

Further, the outdoor unit 10 comprises a temperature sensor 19 for measuring the outdoor temperature t_{ambient}. The sensor 19 is disposed at the outdoor unit and, hence, influenced by the temperature of the evaporator/condenser 14 surface.

The indoor unit 20 further comprises a pump 27 and a backup heater 26. The pump serves for circulating the fluid (heating or cooling fluid) in the fluid circuit (21, 31, 34, 35, 36, 22). The purpose of the backup heater 26 is to cope with situations in which the heat pump described above is not capable to satisfy the entire heating demand (at very low temperatures, e.g. below -10°C). This backup heater 26 in some cases may also be omitted or be substituted by common boilers which are already existing in the building into which the installation of the present invention is to be implemented.

In the heating mode the fluid (heating fluid) enters the indoor unit 20 through the inlet 22, passes the condenser 25, wherein heat is transferred from the refrigerant to the fluid, then flows through the pump 27 which circulates the fluid in the fluid circuit and subsequently passes through the backup heater 26 in which the fluid may be additionally heated if necessary. Afterwards and by controllin the valve 32 the fluid is either supplied to the floor heating loops 40 and the heat emitter 41 (see Fig. 1) or alternatively to the hot water tank piping (31, 34). In the latter case, the fluid may enter the hot water tank 30 by means of the piping 31 passing the heating coil inside the hot water tank 30 thereby transferring the heat from the fluid to the water contained in the hot water tank 30 and subsequently being refed to the circuit by the pipings 34 and 36 finally being reintroduced into the indoor unit via the inlet 22. Similar, the fluid may also be supplied to the floor heating loops 40 as a heat emitter or the radiator 41 shown in Fig. 1 and subsequently be reintroduced into the indoor unit via the inlet 22. In case the temperature of the fluid is not sufficient to heat the hot water in the hot water tank an additional (booster) heater 33 may be provided in the hot water tank.

As previously mentioned, the circulation of the fluid in the cooling mode is the same but the cycle of the heat pump (flow direction of the refrigerant) is reversed.

Furthermore, a temperature sensor 28 for measuring the temperature of the heating medium leaving the condenser 25 which in the following is referred to as T_{1wc} is provided. However, it is to be understood that the flow temperature of the heating medium may also be measured upstream of the condenser 25.

In the following, the control of the room heating installation explained with reference to Figs. 1 and 2 is discussed in more detail referring to Fig. 3 to 8.

In particular, if the outdoor temperature T_{ambient} is e.g. 18°C the flow temperature T_{1wc} will be set by the control to e.g. 25°C, which in turn leads to a floor temperature T_{f} of 25°C. If the outdoor temperature T_{ambient} decreases, the set flow temperature T_{1wc} will be linearly decreased and in the example will be set to 38°C corresponding to an outdoor temperature of -10°C. This flow temperature leads to a floor temperature of 30°C. The range between -10°C to 18°C is said to cover most of the days during the year in an average European country and an average year. Therefore, the room heating of the present invention is capable of providing a floor temperature in a range between 22°C and 30°C, wherein the flow temperature is closely related to the outdoor temperature and in most cases of the year will result in the floor temperature between 22°C and 30°C which is perceived as a comfortable floor temperature.

The efficiency of the room heating in the heating mode is calculated based on a coefficient of performance (COP) = Te/Te-Tc, wherein Te is the evaporating temperature and T_{c} is the condensing temperature both in Kelvin. That is, if the condensing temperature is reduced the efficiency of the heat pump system increases. The condensing temperature, however, is closely related to the flow temperature T_{lwc} and increases with an increasing flow temperature and decreases with a decreasing flow temperature. Hence and because of the adapted flow temperature of the present invention, the condensing temperature T_{c} is also adapted based on the outdoor temperature. In addition, the efficiency depends on the difference between the temperature indoor (flow temperature) and the outdoor temperature. I.e. at low outdoor temperature of below -5°C, the efficiency rapidly drops.

As previously indicated, the compressor of the heat pump of the present invention preferably is inverter controlled so that the compressor frequency may be adapted to the required heating load and/or the outdoor temperature, respectively.

In Fig. 5 there is shown a schematic diagram showing the efficiency of the system relative to the compressor frequency or the outdoor temperature.

Considering the existing installtions with a predetermined set flow temperature T_{lwc} of 38°C resulting in a condensing temperature of 40°C the efficiency of the installation may not exceed a certain low limit L.

However, because of the adapted flow temperature of the present invention together with the inverter controlled compressor (adapted compressor frequency) a higher limit H in regard of the efficiency may be achieved and the overall efficiency of the installation is, therefore, increased.

In particular, in the existing system having a fixed flow temperature of 38°C and a resulting condensing temperature Tc of 40°C the efficiency of the installation may reach a limit L at intermediate outdoor temperatures but a very low efficiency at high temperatures of about 18°C and above and very low temperatures at about 10°C and lower. This is visualized by the curve 63 in Fig. 5.

In the present invention, however, the flow temperature is adapted to the outdoor temperature in that the lower the outdoor temperature becomes the higher becomes the flow temperature and vice versa. In order to obtain a lower flow temperature, a lower condensing temperature T_{c} is required. In other words, if because of higher outdoor temperatures a lower heating load is required, the condensing temperature T_{c} is reduced accordingly, leading to an increased efficiency in higher temperature ranges as depicted by the curve 64 in Fig.5. Hence, the drop of efficiency in higher temperature ranges as in the existing installations may be prevented by the present invention. A higher efficiency limit H may be obtained.

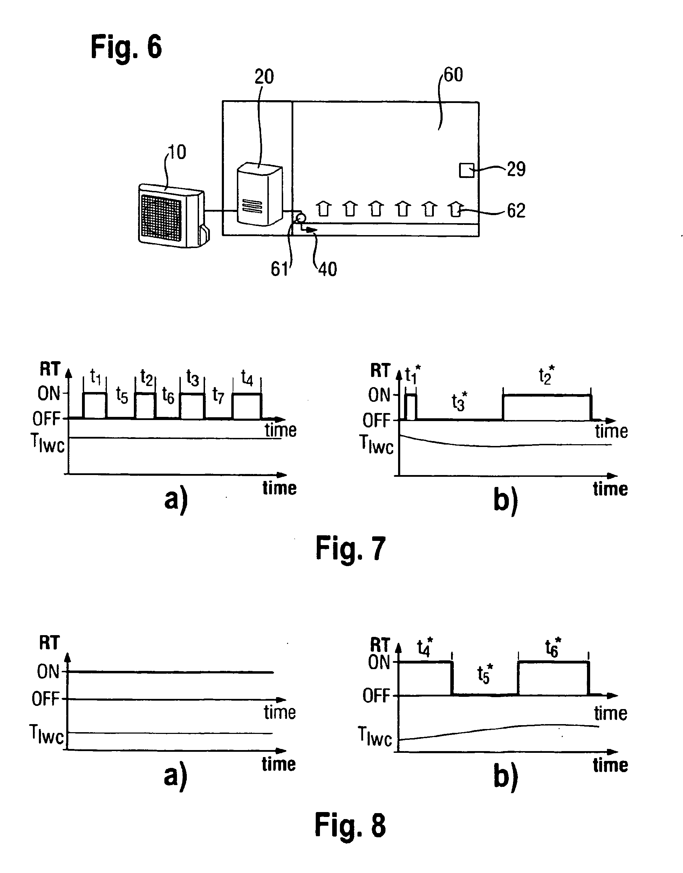

In addition, Fig. 6 shows the installation of Figs. 1 and 2 in a schematic view and showing a room 60 to be heated. The heating medium piping is connected to the floor heating loops 40 in the room 60 via a valve 61. The floor heating loops 40 serve as a heat emitter to emit heat 26 for heating the room. The valve 61 is formed to communicate with a room thermostat RT 29, wherein a desired room temperature may be input (set) in the room thermostat 29 by a user. Based on the result of a comparison between the desired room temperature and the actual room temperature, the room thermostat 29 controls a valve 61 to either supply heating medium to the floor heating loops 40 or close a valve 61 in order not to supply any further heating medium to the floor heating loops 40.

Figs. 7 and 8 compare an installation in which the flow temperature is not adapted based on the room temperature (Figs. 7a and 8a) and an installation according to the present invention in which the flow temperature Tlwc is adapted based on the room temperature.

In Fig. 7a) the room thermostat 29 has a very high cycling rate between an ON-Cycle and an OFF-Cycle over a predetermined period of time. In particular considering Fig. 7a) there are four short ON-cycles t₁ to t₄ with three short OFF-Cycles t₅ to t₇ inbetween, wherein the flow temperature T_{lwc} over the entire period of time remains constant.

The present invention, however, suggests adapting the flow temperature T_{lwc} based on the room temperature and in the present invention based on the period of time during which heating medium is supplied to the heat emitter, i.e. in which the room thermostat 29 (RT) is in the ON-Cycle. In other words, the present invention suggests a control which is configured to compare the time t_{1*} of the on cycle with a predetermined time tₚ. If t_{1*} < tₚ the flow temperature T_{lwc} is decreased as shown in Fig. 7b). This results in a longer period of time t_{3*} of an OFF-Cycle and to a longer period of time t_{2*} in an ON-Cycle.

Fig. 8 shows in Fig. 8a) a room heating which does not adapt the flow temperature with respect to the room temperature of the room to be heated. In this case, the flow temperature T_{lwc} is too low to obtain the desired room temperature in the room 60. Hence, the room thermostat 29 remains continuously in the ON-Cycle controlling the valve 61 to supply heating medium to the floor heating loops 40. According to the present invention shown in Fig. 8b), if the time period t_{4*} > tₚ, the flow temperature T_{lwc} is increased so that an OFF-Cycle t_{5*} follows then again followed by an ON-Cycle t_{6*}. An example of the predetermined time tₚ resides in the range of 600 to 1800 seconds and preferably between 900 to 1500, preferably of 1200 seconds.

This adaption of the flow temperature T_{lwc} based on the desired room temperature and in this embodiment based on the cycling rate of the thermostat 29 not only leads to an increase of the lifetime of the thermostat because a very high cycling rate and a very low (no cycling rate) are prevented but also to a more constant and stable room temperature in the room 60, which is perceived more comfortable. Furthermore, this adaption of the flow temperature, as explained with respect to Figs. 4 and 5, result in an increased efficiency of the overall installation, because of the lower condensing temperature T_{c} necessary and obtained by a lower compressor frequency.

In case more than one room is to be heated by the room heating of the present invention as for example shown in Fig. 1 of the present invention, the adaption of the flow temperature based on the room temperature may be based on an average of the aforesaid calculation with respect to Figs. 7 and 8. Hence, the system compares the cycling rate of the thermostat in all of the rooms to be heated and based on each cycle adapts the flow temperature so as to obtain the most appropriate result for all rooms. In this context, it is rather preferred to have a higher cycling rate rather than no cycling rate as in Fig. 8a so that priority is set to obtain the desired room temperature rather than to prevent a too high cycling rate.

Furthermore, the heating of the present invention, when certain conditions are met, such as cold and humid climate conditions performs a defrosting mode in order to eliminate an ice cover formed on the outer surface of the outdoor evaporator decreasing the heat transfer between the air and the refrigerant of the heat pump. Such a defrosting mode may be effected by various configurations. For example, the installation of the present invention may be operated in a defrosting mode in which the circulation of the refrigerant in the heat pump is counter-clockwise in the Fig. 2 and, hence, similar to the cooling mode. Yet, in this defrosting mode contrary to the cooling mode, preferably no cooling medium is supplied to the floor heating loops but rather a closed-loop is obtained in that a further valve (not shown) may be provided in the piping 31 which e.g. may be switched between a position allowing fluid to flow through the hot water container 30 and a position connecting to a not shown piping which is connected to the piping 36 and, therefore, enables flowing of the medium back through the condenser/evaporator 25.

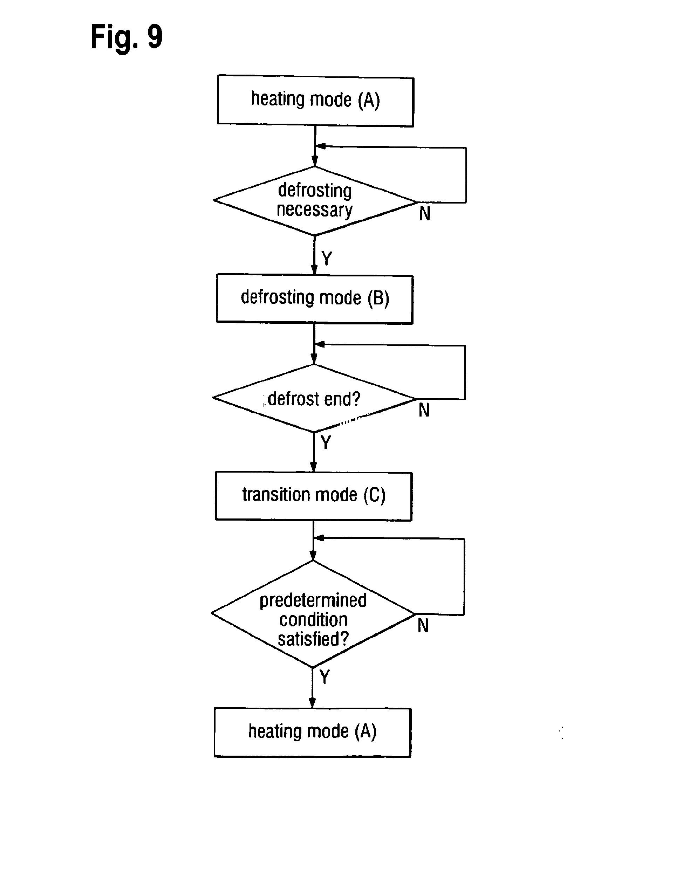

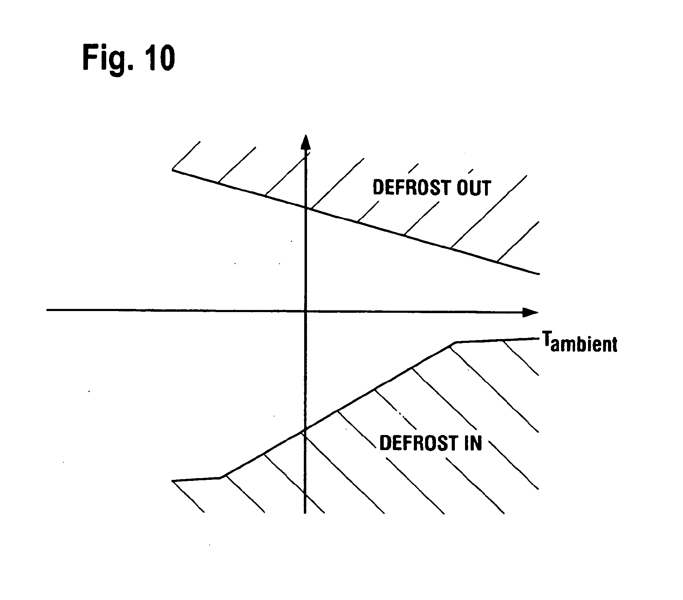

Referring to Fig. 9, the operation of the heating starts in the heating mode (A), wherein the flow temperature is set based on at least the outdoor temperature measured by the outdoor temperature 19 and optionally as described above on the room temperature(-s) measured in the room(-s) to be heated. Then the control assesses whether a defrosting is necessary, i.e. if predetermined conditions for defrosting have been met. Such predetermined conditions may comprise a certain given and predetermined time interval. If defrosting is necessary, the control starts defrosting mode (B) which may be one of the possibilities named above. Subsequently, the control assesses whether the defrosting mode (B) is to be ended. This evaluation may be based on certain conditions. That is, if certain conditions are met, the control concludes on ending the defrosting mode. In starting and ending the defrosting mode an additional parameter to be taken into account is the evaporation temperature Tₑ of the refrigerant in the heating mode together with the outdoor temperature T_{ambient} measured by the outdoor sensor 19. The manner in which these two parameters influence the starting and ending of the defrost mode is shown in the schematic chart of Fig. 10. That is, if the evaporation temperature measured in the heating mode is in the "defrost-in" area, the defrost mode can be started. If the evaporation temperature is in the "defrost-out" area during defrosting, then the unit stops the defrosting. Afterwards, the heating of the present invention switches to a transition mode (C). In the transmission mode (C), the flow temperature T_{lwc} is set based on the outdoor temperature measured immediately before starting the defrosting mode (B), i.e. the last value measured by the outdoor temperature sensor 19 before starting of the defrosting mode (B). The flow temperature based on this temperature may then be set as described above.

Subsequently and if a predetermined condition is satisfied, such as if a certain amount of time has been lapsed (e.g. 360 seconds) or a certain temperature of the refrigerant downstream of the evaporator 40 such as for example below T_{ambient} which was measured just before the defrosting mode have been met, the control again switches (returns) to the normal heating mode (A) setting the flow temperature T_{lwc} based on at least the actual outdoor temperature measured by the sensor 19 as it has been described above.

In an alternative embodiment, the transition mode (C) and, hence, the switching from the transition mode (C) to the normal heating mode (C) based on a predetermined condition may be omitted.

Furthermore and as also shown in Fig. 1, the present invention is not limited to floor heating loops 40 but may also be applied to rooms heated by a conventional radiator 41 as heat emitter. In addition, it is to be understood that also a control configured to set the flow temperature of the heating medium based on only the outdoor temperature rather than the outdoor temperature and the room temperature already leads to an increase in efficiency compared to existing systems. In particular, such a control in combination with an inverter controlled compressor may be used separately without the additional adaption of the flow temperature based on the room temperature as explained with respect to Figs. 6 to 8. Moreover, as will be understood, the present invention is not limited to the room heating system explained with respect to Figs. 1 and 2 but may also be adapted in a room heating system without a cooling mode or in other room heating systems comprising a heat pump. In addition and as previously indicated, the flow temperature does not necessarily have to be the temperature leaving the condenser 25 but may also be the temperature entering the condenser.
In addition, it is also conceivable to not linearly correspond the flow temperature of the heating medium to the outdoor temperature as shown in Fig. 4. Yet, the linear correlation at present is considered preferred.

Therefore, it will be apparent to the skilled person that the present invention may be modified an adapted in various ways so that it is to be understood that the present invention is not limited to the above-preferred embodiment.

## Claims

1. A heating comprising:
a heat pump having an evaporator (14), a compressor (15), a condenser (25) and an expansion means (13) connected by a refrigerant piping (11, 12, 16, 27) in a cycle, at least the evaporator being arranged in an outdoor unit (10);
a heating medium piping (21, 31, 34, 35, 35, 22) formed to circulate a heating medium and to flow the heating medium through the condenser exchanging heat between the refrigerant and the heating medium;
an outdoor temperature sensor (19) arranged in or at the outdoor unit; and
a control configured to perform a defrosting mode (B) defrosting the outdoor evaporator, **characterized in that** the control is configured to set the flow temperature of the heating medium based on the outdoor temperature measured by the sensor to linearly decrease the flow temperature of the heating medium with an increasing outdoor temperature and to linearly increase the flow temperature of the heating medium with a decreasing outdoor temperature, wherein the control is configured to ignore the measurement result of the outdoor temperature sensor during the defrosting mode.

2. The heating as set forth in claim 1, wherein the control is configured to set the flow temperature of the heating medium after termination of the defrosting mode (B) based on the outdoor temperature measured immediately before starting the defrosting mode.

3. The heating as set forth in claim 2, wherein the control is configured to set the flow temperature of the heating medium after determination of the defrosting mode (B) or during the defrosting mode based on the outdoor temperature measured immediately before starting the defrosting mode until a predetermined condition is met and to set the flow temperature of the heating medium after the predetermined condition has met based on the actual outdoor temperature measured at this time.

4. The heating as set forth in claim 1, wherein the control is configured to set the flow temperature of the heating medium after termination of the defrosting mode (B) based on the actual outdoor temperature measured at this time.

5. The heating as set forth in any one of the preceding claims, wherein the flow temperature of the heating medium is set at maximum between 36°C and 40°C, preferably at 38°C, and at minimum between 23°C and 27°C, preferably at 25°C.

6. The heating as set forth in any one of the preceding claims, wherein the compressor (15) is connected to the control via an inverter and the control is configured to adapt the compressor frequency based on the outdoor temperature measured by the sensor.

7. The heating as set forth in claim 6, wherein the control is configured to decrease the compressor frequency with an increasing outdoor temperature and to increase the compressor frequency with a decreasing outdoor temperature.

8. The heating as set forth in any one of the preceding claims, wherein the outdoor temperature sensor (19) is arranged in the proximity of the evaporator.

9. Method for controlling a heating comprising:
a heat pump having an outdoor evaporator (14), a compressor (15), a condenser (25) and an expansion means (13) connected by a refrigerant piping (11, 12, 16, 17) in a cycle;
a heating medium piping (21, 31, 34, 35, 36, 22) formed to circulate a heating medium and to flow the heating medium through the condenser exchanging heat between the refrigerant and the heating medium; the method comprising the steps of:
measuring the outdoor temperature, and performing a defrosting mode defrosting the outdoor evaporator, **characterized by**
setting the flow temperature of the heating medium leaving the condenser based on the outdoor temperature, wherein the measured outdoor temperature is ignored during the defrosting mode and wherein the flow temperature of the heating medium is linearly decreased with an increase of the outdoor temperature and linearly increased with a decrease of the outdoor temperature.

10. Method as set forth in claim 9, wherein the flow temperature of the heating medium after termination of the defrosting mode is set based on the outdoor temperature measured immediately before starting the defrosting mode.

11. Method as set forth in claim 10, wherein the flow temperature of the heating medium after determination of the defrosting mode is set based on the outdoor temperature measured immediately before starting the defrosting mode until a predetermined condition is met and after the predetermined condition is met is set based on the actual outdoor temperature measured at this time.

12. Method as set forth in claim 9, wherein the flow temperature of the heating medium after termination of the defrosting mode is set based on the actual outdoor temperature measured at this time.

13. Method as set forth in any one of the claims 9 to 12, wherein the temperature of the heating medium is set at maximum between 36°C and 40°C, preferably at 38°C, and at minimum between 23°C and 27°C, preferably at 25°C.

14. Method as set forth in any one of the claims 9 to 13, wherein the compressor frequency is controlled based on the measured outdoor temperature.

15. Method as set forth in claim 14, wherein the compressor frequency is decreased with an increase of the outdoor temperature and increased with a decrease of the outdoor temperature.

## Patentansprüche

1. Heizvorrichtung mit:
einer Wärmepumpe, die einen Verdampfer (14), einen Verdichter (15), einen Kondensator (25) und ein Expansionsmittel (13) aufweist, welche durch eine Kühlmittelleitung (11, 12, 16, 27) in einem Kreislauf verbunden sind, wobei zumindest der Verdampfer in einer Außeneinheit (10) angeordnet ist;
einer Heizmediumleitung (21, 31, 34, 35, 35, 22), die ausgebildet ist, ein Heizmedium zu zirkulieren und das Heizmedium durch den Kondensator zum Wärmetauschen zwischen dem Kühlmittel und dem Heizmedium fließen zu lassen;
einem Außentemperatursensor (19), der in oder an der Außeneinheit angeordnet ist, und
einer Steuereinrichtung, die eingerichtet ist, einen Abtaubetrieb (B) zum Abtauen des Außenverdampfers auszuführen, **dadurch gekennzeichnet, dass** die Steuereinrichtung eingerichtet ist, die Fließtemperatur des Heizmediums auf Basis der Außentemperatur, die durch den Sensor gemessen wird, einzustellen, um die Fließtemperatur des Heizmediums mit einer ansteigender Außentemperatur linear zu verringern und die Fließtemperatur des Heizmediums mit einer absinkender Außentemperatur linear zu erhöhen, wobei die Steuereinrichtung eingerichtet ist, das Messergebnis des Außentemperatursensors während des Abtaubetriebs zu ignorieren.

2. Heizvorrichtung nach Anspruch 1, bei der die Steuereinrichtung eingerichtet ist, die Fließtemperatur des Heizmediums nach dem Beenden des Abtaubetriebs (B) auf Basis der Außentemperatur einzustellen, die unmittelbar vor Beginn des Abtaubetriebs gemessen wurde.

3. Heizvorrichtung nach Anspruch 2, bei der die Steuereinrichtung eingerichtet ist, die Fließtemperatur des Heizmediums nach dem Festlegen des Abtaubetriebs (B) oder während des Abtaubetrieb auf der Basis der Außentemperatur einzustellen, die unmittelbar vor Beginn des Abtaubetriebs gemessen wurde, bis eine vorbestimmte Bedingung erfüllt ist, und die Fließtemperatur des Heizmediums nach der Erfüllung der vorbestimmten Bedingung auf Basis der tatsächlichen zu diesem Zeitpunkt gemessen Außentemperatur einzustellen.

4. Heizvorrichtung nach Anspruch 1, bei der die Steuereinrichtung eingerichtet ist, die Fließtemperatur des Heizmediums nach dem Beenden des Abtaubetriebs (B) auf Basis der tatsächlichen zu diesem Zeitpunkt gemessen Außentemperatur einzustellen.

5. Heizvorrichtung nach einem der vorhergehenden Ansprüche, bei der die Fließtemperatur des Heizmediums maximal zwischen 36°C und 40°C, vorzugsweise bei 38°C, und minimal zwischen 23°C und 27°C, vorzugsweise bei 25°C, eingestellt wird.

6. Heizvorrichtung nach einem der vorhergehenden Ansprüche, bei welcher der Verdichter (15) mit der Steuereinrichtung über einen Invertierer verbunden ist und die Steuereinrichtung eingerichtet ist, die Verdichterfrequenz auf Basis der durch den Sensor gemessenen Außentemperatur anzupassen.

7. Heizvorrichtung nach Anspruch 6, bei der die Steuereinrichtung eingerichtet ist, die Verdichterfrequenz mit einer zunehmenden Außentemperatur zu verringern und die Verdichterfrequenz mit einer abnehmenden Außentemperatur zu erhöhen.

8. Heizvorrichtung nach einem der vorhergehenden Ansprüche, bei welcher der Außentemperatursensor (19) in der Nähe des Verdampfers angeordnet ist.

9. Verfahren zur Steuerung einer Heizvorrichtung, umfassend:
eine Wärmepumpe mit einem Außenverdampfer (14), einen Verdichter (15), einen Kondensator (25) und ein Expansionsmittel (13), welche durch eine Kühlmittelleitung (11, 12, 16, 17) in einem Kreislauf verbunden sind;
eine Heizmediumleitung (21, 31, 34, 35, 36, 22), die ausgebildet ist, ein Heizmedium zu zirkulieren und das Heizmedium durch den Kondensator zum Wärmetauschen zwischen dem Kühlmittel und dem Heizmedium fließen zu lassen; wobei das Verfahren die Schritte umfasst:
Messen der Außentemperatur, und Ausführen eines Abtaubetriebs zum Abtauen des Außenverdampfers, **gekennzeichnet durch**
Einstellen der Fließtemperatur des Heizmediums, welches aus dem Kondensator austritt, auf Basis der Außentemperatur, wobei die gemessene Außentemperatur während des Abtaubetriebs ignoriert wird und wobei die Fließtemperatur des Heizmediums mit einer ansteigenden Außentemperatur linear verringert wird und mit einer abfallenden Außentemperatur linear erhöht wird.

10. Verfahren nach Anspruch 9, bei dem die Fließtemperatur des Heizmediums nach dem Beenden des Abtaubetriebs auf Basis der Außentemperatur eingestellt wird, die unmittelbar vor Beginn des Abtaubetriebs gemessen wurde.

11. Verfahren nach Anspruch 10, bei dem die Fließtemperatur des Heizmediums nach dem Festlegen des Abtaubetriebs auf Basis der Außentemperatur eingestellt wird, die unmittelbar vor dem Beginn des Abtaubetriebs gemessen wurde, bis eine vorbestimmte Bedingung erfüllt ist, und nachdem die vorbestimmte Bedingung erfüllt ist, auf Basis der tatsächlichen zu diesem Zeitpunkt gemessen Außentemperatur eingestellt wird.

12. Verfahren nach Anspruch 9, bei dem die Fließtemperatur des Heizmediums nach dem Beenden des Abtaubetriebs auf Basis der tatsächlichen zu diesem Zeitpunkt gemessen Außentemperatur eingestellt wird.

13. Verfahren nach einem der Ansprüche 9 bis 12, bei dem die Temperatur des Heizmediums maximal zwischen 36°C und 40°C, vorzugsweise bei 38°C, und minimal zwischen 23°C und 27°C, vorzugsweise bei 25°C, eingestellt wird.

14. Verfahren nach einem der Ansprüche 9 bis 13, bei dem die Verdichterfrequenz auf Basis der gemessenen Außentemperatur gesteuert wird.

15. Verfahren nach Anspruch 14, bei dem die Verdichterfrequenz mit einer Zunahme der Außentemperatur verringert und mit einer Abnahme der Außentemperatur erhöht wird.

## Revendications

1. Chauffage comprenant :
une pompe à chaleur ayant un évaporateur (14), un compresseur (15), un condenseur (25) et un moyen d'expansion (13) reliés par une tuyauterie de réfrigérant (11, 12, 16, 27) dans un cycle, au moins l'évaporateur étant agencé dans une unité extérieure (10) ;
une tuyauterie de milieu chauffant (21, 31, 34, 35, 35, 22) formée pour faire circuler un milieu chauffant et pour faire s'écouler le milieu chauffant à travers le condenseur en échangeant de la chaleur entre le réfrigérant et le milieu chauffant ;
un capteur de température extérieure (19) agencé dans ou au niveau de l'unité extérieure ; et
une unité de commande configurée pour effectuer un mode de dégivrage (B) dégivrant l'évaporateur extérieur, **caractérisé en ce que** l'unité de commande est configurée pour fixer la température d'écoulement du milieu chauffant sur base de la température extérieure mesurée par le capteur pour diminuer la température d'écoulement du milieu chauffant linéairement à une température extérieure croissante et pour augmenter la température d'écoulement du milieu chauffant linéairement à une température extérieure décroissante, dans lequel l'unité de commande est configurée pour ignorer le résultat de mesure du capteur de température extérieure pendant le mode de dégivrage.

2. Chauffage selon la revendication 1, dans lequel l'unité de commande est configurée pour fixer la température d'écoulement du milieu chauffant après terminaison du mode de dégivrage (B) sur base de la température extérieure mesurée immédiatement avant de commencer le mode de dégivrage.

3. Chauffage selon la revendication 2, dans lequel l'unité de commande est configurée pour fixer la température d'écoulement du milieu chauffant après détermination du mode de dégivrage (B) ou pendant le mode de dégivrage sur base de la température extérieure mesurée immédiatement avant de commencer le mode de dégivrage jusqu'à ce qu'une condition prédéterminée soit satisfaite et pour fixer la température d'écoulement du milieu chauffant après que la condition prédéterminée ait été satisfaite sur base de la température extérieure réelle mesurée à cet instant.

4. Chauffage selon la revendication 1, dans lequel l'unité de commande est configurée pour fixer la température d'écoulement du milieu chauffant après terminaison du mode de dégivrage (B) sur base de la température extérieure réelle mesurée à cet instant.

5. Chauffage selon l'une quelconque des revendications précédentes, dans lequel la température d'écoulement du milieu chauffant est fixée au maximum entre 36 °C et 40 °C, de préférence à 38 °C, et au minimum entre 23 °C et 27 °C, de préférence à 25 °C.

6. Chauffage selon l'une quelconque des revendications précédentes, dans lequel le compresseur (15) est relié à l'unité de commande par un inverseur et l'unité de commande est configurée pour adapter la fréquence de compresseur sur base de la température extérieure mesurée par le capteur.

7. Chauffage selon la revendication 6, dans lequel l'unité de commande est configurée pour diminuer la fréquence de compresseur avec une température extérieure croissante et pour augmenter la fréquence de compresseur avec une température extérieure décroissante.

8. Chauffage selon l'une quelconque des revendications précédentes, dans lequel le capteur de température extérieure (19) est agencé à proximité de l'évaporateur.

9. Procédé pour commander un chauffage comprenant :
une pompe à chaleur ayant un évaporateur extérieur (14), un compresseur (15), un condenseur (25) et un moyen d'expansion (13) reliés par une tuyauterie de réfrigérant (11, 12, 16, 17) dans un cycle ;
une tuyauterie de milieu chauffant (21, 31, 34, 35, 36, 22) formée pour faire circuler un milieu chauffant et pour faire s'écouler le milieu chauffant à travers le condenseur échangeant de la chaleur entre le réfrigérant et le milieu chauffant ; le procédé comprenant les étapes consistant à :
mesurer la température extérieure, et
exécuter un mode de dégivrage dégivrant l'évaporateur extérieur, **caractérisé par**
l'étape consistant à fixer la température d'écoulement du milieu chauffant quittant le condenseur sur base de la température extérieure, dans lequel la température extérieure mesurée est ignorée pendant le mode de dégivrage et dans lequel la température d'écoulement du milieu chauffant est diminuée linéairement à une augmentation de la température extérieure et augmentée linéairement à une diminution de la température extérieure.

10. Procédé selon la revendication 9, dans lequel la température d'écoulement du milieu chauffant après terminaison du mode de dégivrage est fixée sur base de la température extérieure mesurée immédiatement avant de commencer le mode de dégivrage.

11. Procédé selon la revendication 10, dans lequel la température d'écoulement du milieu chauffant après détermination du mode de dégivrage est fixée sur base de la température extérieure mesurée immédiatement avant de commencer le mode de dégivrage jusqu'à ce qu'une condition prédéterminée soit satisfaite et après que la condition prédéterminée ait été satisfaite est fixée sur base de la température extérieure réelle mesurée à cet instant.

12. Procédé selon la revendication 9, dans lequel la température d'écoulement du milieu chauffant après terminaison du mode de dégivrage est fixée sur base de la température extérieure réelle mesurée à cet instant.

13. Procédé selon l'une quelconque des revendications 9 à 12, dans lequel la température du milieu chauffant est fixée au maximum entre 36 °C et 40 °C, de préférence à 38 °C, et au minimum entre 23 °C et 27 °C, de préférence à 25 °C.

14. Procédé selon l'une quelconque des revendications 9 à 13, dans lequel la fréquence de compresseur est commandée sur base de la température extérieure mesurée.

15. Procédé selon la revendication 14, dans lequel la fréquence de compresseur est diminuée avec une augmentation de la température extérieure et augmentée avec une diminution de la température extérieure.
